# EUROPEAN PATENT APPLICATION

(11) **EP 4 851 801 A1**
(43) Date of publication of application: **09.12.2026**
(21) Application number: 25226838.8
(22) Date of filing: 23.12.2025
(51) Int. Cl.: G06F 9/50

(54) **ADJUSTMENT OF MICROSERVICE DEPLOYMENT**

(30) Priority: 05.06.2025 US 202519229345
(71) Applicant: SAP SE, 69190 Walldorf (DE)
(72) Inventor: LI, Hui, 69190 Walldorf (DE)
(74) Representative: Müller-Boré & Partner Patentanwälte PartG mbB

(57) **Abstract**

Systems and methods include reception of data indicative of a first assignment of a plurality of microservice instances to respective ones of a plurality of nodes, determination of consumption of a first type of resource by each of the microservice instances, determination of a deviation based on the consumption of the first type of resource by the microservice instances executed by each node, determination of a first imbalance based on the deviations, determination of a second assignment of the plurality of microservice instances to the plurality of nodes based on the first assignment, the first imbalance and a total amount of requested resources of the first type requested for each nodes, and deployment of the plurality of microservice instances to the plurality of nodes according to the second assignment.

## Description

### BACKGROUND

A microservice-based application is implemented using independently-deployed microservices, each of which provides distinct functions of the application. Each microservice is independently deployed in its own computing process (e.g., server/virtual machine/container) and is independently accessible via its exposed APIs. Microservices are often implemented in the cloud in order to leverage the redundancy, economies of scale and other benefits provided by cloud platforms.

Typically, a desired deployment includes one or more instances of each microservice. An application provider defines the computing resources required by each instance of each microservice. Based on the definition, an orchestration platform deploys the one or more instances of each microservice to nodes such that each node meets the resource requirements of all the service instances which are deployed thereon.

Actual resource consumption of the deployed microservices may differ significantly from expectations. These differences may vary over time and be affected by execution of related microservices. One approach for dealing with these differences is to scale up and scale down computing resources (e.g., CPU power, memory size, and network bandwidth) allocated to the computing nodes on which the microservices are executed. This approach does not consider the individual resource needs of multiple service instances executing on the same node. Moreover, the approach is not always available because the amount of resources allocated to a given node eventually reaches a finite limit.

Systems are desired for efficient adjusting the deployment of microservices within an orchestration platform based on their respective resource usages.

### BRIEF DESCRIPTION OF THE DRAWINGS

FIG. 1 illustrates a container orchestration platform according to some embodiments.
FIG. 2 is a flow diagram of a process to adjust the deployment of microservices within an orchestration platform according to some embodiments.
FIG. 3 illustrates memory usage by a microservice instance executing on a node over time.
FIG. 4 illustrates memory usage by a microservice instance executing on a node over time.
FIG. 5 illustrates total memory usage by two microservice instances executing on a node over time according to some embodiments.
FIG. 6 illustrates a container orchestration platform after adjusting a deployment of microservice instances to nodes according to some embodiments.
FIG. 7 illustrates total memory usage by two microservice instances executing on a node over time according to some embodiments.
FIGS. 8A and 8B illustrate a process to determine an improved microservice deployment according to some embodiments.
FIG. 9 illustrates a process to determine an alternative microservice deployment according to some embodiments.
FIG. 10 illustrates a cloud-based cluster executing microservices according to some embodiments.

### DETAILED DESCRIPTION

The following description is provided to enable any person in the art to make and use the described embodiments. Various modifications, however, will remain readily-apparent to those in the art.

Some embodiments facilitate microservice deployment in a microservices-based system based on actual resource consumption. For example, a microservice configuration may specify a first amount of random-access memory required for a first microservice and a second amount of random-access memory required for a second microservice. Accordingly, an instance of the first microservice should be deployed only to a node having at least the first amount of memory available to the first microservice and an instance of the second microservice should be deployed only to a node having at least the second amount of memory available to the second microservice. Moreover, a node executing an instance of the first microservice and an instance of the second microservice should have at least the first amount of memory available to the first microservice and the second amount of memory available to the second microservice.

Some embodiments determine the consumption of one or more resources, such as random-access memory, by each of a plurality of microservice instances executed by a plurality of nodes. A deviation is then determined based on the total amount of random-access memory required for the microservice instances executed by each node and the actual consumption of random-access memory by the microservice instances executed by each node. A new assignment of the plurality of microservice instances to the plurality of nodes is determined based on the deviation, and the plurality of microservice instances are deployed to the plurality of nodes according to the new assignment. The thusly-deployed microservice instances may result in better-equalized resource consumption and improved resource utilization.

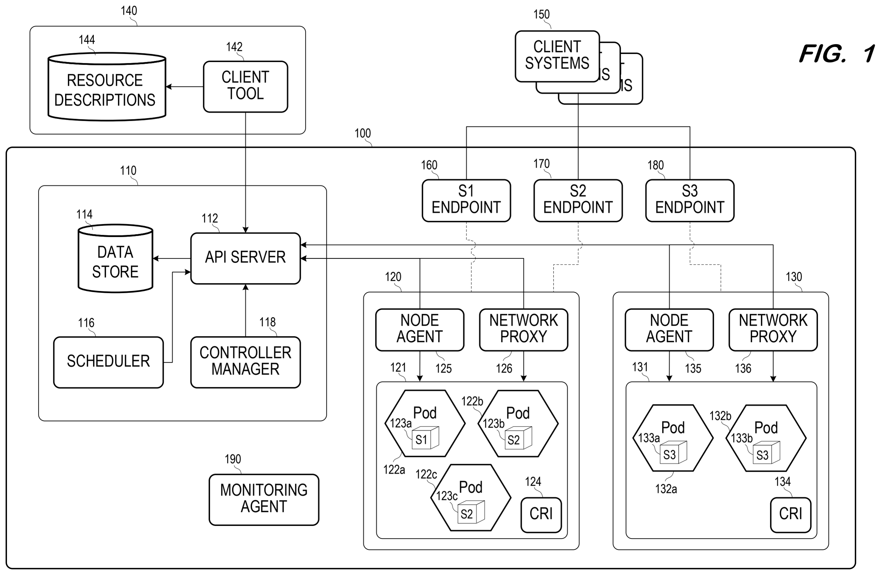

FIG. 1 illustrates a system according to some embodiments. The illustrated components of FIG. 1 may be implemented using any suitable combination of computing hardware and/or software that are or become known. The FIG. 1 system may comprise any number of hardware and software components which provide functionality to one or more users of client systems 150. Such combinations may include on-premise servers, cloud-based servers, and/or elastically-allocated virtual machines. In some embodiments, two or more components are implemented by a single computing device. As will be described later, FIG. 1 may represent an initial deployment of resources to support multiple microservices. This initial deployment may be set by a system administrator using his or her best judgment as to where to assign certain microservices on certain nodes to consume certain resources. Over time, the actual quantity of resources consumed may change such that the initial deployment shown in FIG. 1 may need adjustment.

Cluster 100 is a cluster of a container orchestration platform such as but not limited to Kubernetes. According to some embodiments, cluster 100 exposes computing functionality to users. The computing functionality may be referred to as an application, a service, a microservice, etc. For example, a microservice endpoint 160-180 receives a request from a user and cluster 100 executes program code of a microservice instance to fulfill the request.

Cluster 100 includes control plane 110, worker node 120 and worker node 130. Control plane 110 manages worker nodes 120 and 130 and pods executing therein. Cluster 100 may include any number of nodes, each of which may be a virtual machine or a physical machine. Control plane 110 may execute across multiple machines to provide fault-tolerance and high availability.

Each of nodes 120, 130 includes one or more pods executing within respective memory 121 and 131. A pod models an application-specific "logical host" and contains one or more containers and shared resources for its containers. The containers of a given pod are co-located, co-scheduled, and run in a shared context of the node in which the pod exists. The shared resources may include, for example, CPU cores, random access memory, IP addresses, and network ports of the node on which the pod is deployed. A container is a process with enforced restrictions. Examples of restrictions which may be enforced on a process include a maximum CPU utilization and a maximum memory utilization.

A container executes a container image, also referred to as a containerized application. A container image is a self-contained executable package containing an executable (i.e., an application) and a runtime required by the executable, if any, dependencies (e.g., application and system libraries), and default values of configuration settings. In the present description, a microservice may be implemented as a containerized application and different instances of the microservice may be executed by different containers.

Node 120 includes pods 122a, 122b and 122c containing, respectively, containers 123a, 123b and 123c. An instance of microservice S1 has been deployed to container 123a, an instance of microservice S2 has been deployed to container 123b, and an instance of microservice S2 has been deployed to container 123c. Node 130 includes pods 132a and 132b containing, respectively, containers 133a and 133b. An instance of microservice S3 has been deployed to container 133a, and another instance of microservice S3 has been deployed to container 133b. Any of pods 122a, 122b, 122c, 132a, and 132b may contain one or more other containers.

Each node 120, 130 also executes processes such as container runtime 124, 134, node agent 125, 135 and network proxy 126, 136. A container runtime is responsible for creating new containers, retrieving corresponding containerized applications (i.e., microservices), setting up a resource-restricted process space and a file system for the containers, and starting, stopping, and deleting the containers. A node agent registers a node with control plane 110 and ensures that the node includes running containers which conform to the pod specifications of the node. A network proxy maintains network rules on a node to allow network communication between its pods and network sessions inside or outside of cluster 100.

Control plane 110 includes API server 112 which acts as the front end of control plane 110. Data store 114 stores all cluster data, and scheduler 116 selects a node on which a pod should run. Controller manager 118 runs controllers such as but not limited to a controller for noticing and responding when nodes go down, and a controller to watch for one-off tasks and to create pods to run those tasks to completion.

In some embodiments, a service provider may operate client system 140 to invoke client tool 142 (e.g., a command-line tool) to connect to API server 112. The service provider may operate client tool 142 to issue a command line instruction, e.g., run <name of pod> -- image=<name of image>, to API server 112 to create a pod including a container with a specified container image (i.e., microservice).

In some embodiments, client system 140 stores resource descriptions 144. A resource description 144, or manifest, declares the desired state of one or more objects within cluster 100. A resource description for a pod may specify a name of a pod and of one or more containers of the pod, and a container image and a requested amount of CPU and memory for each container. A resource description may also specify a resource limit for a container, in which case the node agent of the node including the container enforces the resource limit.

Resource descriptions 144 may be stored in YAML format in some embodiments. A user of client system 140 may operate client tool 142 to instruct API server 112 to apply one or more resource descriptions 144 to cluster 100 (e.g., create -f pod.yaml, where pod.yaml). API server 112 receives the one or more resource descriptions 144, converts the one or more resource descriptions 144 to an internal format (e.g., executable code) and stores the converted one or more resource descriptions 144 in data store 114.

The following is an example of pod.yaml according to some embodiments:

```
 apiVersion: apps/v1
 kind: Pod
 metadata:
  name: <name of pod>
 spec:
  containers:
   - name: <name of the container>
   resources:
    requests:
      - cpu: "500m"
      - memory: "1Gb"
   image: <name of the container image>
   ports:
    - containerPort: <port number>
```

The components of control plane 110 deploy nodes, pods, containers and microservices within cluster 100 to implement and maintain the desired states specified by the relevant resource descriptions and stored in data store 114. For example, to create pods, scheduler 116 determines a node on which to place a pod based on various algorithms, heuristics, and resource requests for the containers/microservice of the pod. Control plane 110 then transmits an instruction to a node agent of the determined node to create the pod.

For example, node agent 125 creates containers 123a, 123b, 123c using container runtime 124. Creating the containers includes downloading the specified container image of the microservice to be executed by the containers. Each container is then executed to place its pod in an Active state. In the Active state, a pod is able to receive and serve workloads such as requests to the microservice being executed by its container.

Control plane 110 monitors and manages the elements of cluster 100 to ensure the state of cluster 100 maintains conformity with the desired state. Control plane 110 may adjust the number of pods in a given node, the number of nodes and/or the computing resources of a node based on differences between a current state and the desired state. For example, in response to detecting the failure of a node including a certain number of pods, control plane 110 may identify available nodes in cluster 100 and schedule the same number of identical pods on those nodes.

Once the nodes, pods, containers and microservices of cluster 100 have reached the desired state, cluster 100 may be made available to serve incoming requests from client systems 150. For example, a gateway (not shown) receives requests (e.g., API calls via Hyper Text Transfer Protocol (HTTP)) from client systems 150. The gateway determines that the request should be forwarded to one of microservices S1, S2 or S3 provided by cluster 100 and forwards the request to a corresponding endpoint 160, 170 or 180 of cluster 100. The corresponding endpoint 160, 170 or 180 forwards the request to an Active pod which is executing its corresponding microservice. Endpoints 160, 170 and 180 may determine the pod to which the request is forwarded using any suitable algorithm (e.g., round-robin, load-balancing).

Monitoring agent 190 may comprise any one or more components for collecting operational metrics for given time periods (i.e., scalar or time-series data) from the other components of cluster 100. As described herein, the operational metrics may be used to determine an assignment of microservices to nodes which may be more suitable than a specified current deployment.

For each node, agent 190 may collect CPU usage (per core, total), memory usage (total, available, used), disk I/O stats (reads, writes, utilization), network statistics (transmitted/received packets, errors), and file system usage (disk space). From pods and containers, agent 190 may collect, for example, CPU usage per container, memory usage (container limit, request, actual usage), container restarts, uptime, disk I/O per container, network I/O per container. Agent 190 may also collect operational data from API server 112, including but not limited to deployment status (desired vs available replicas), pod status (running, pending, succeeded, failed), node status (ready, not ready, not schedulable), ReplicaSet, StatefulSet, and DaemonSet metrics, resource requests and limits, job completions and failures, and service bindings (identifying the pods executing particular services).

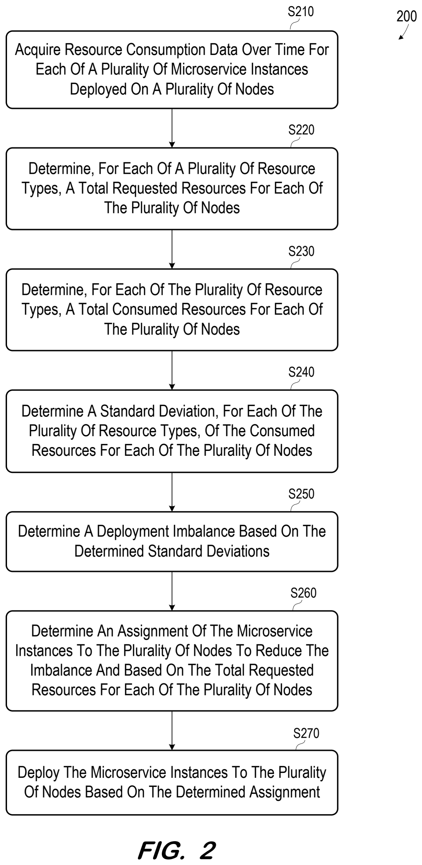

FIG. 2 is a flow diagram of process 200 to adjust the deployment of microservices within an orchestration platform according to some embodiments. Process 200 and the other processes described herein may be performed using any suitable combination of hardware and software. Program code embodying these processes may be stored by any non-transitory tangible medium, including a fixed disk, a volatile or non-volatile random-access memory, a DVD, a Flash drive, or a magnetic tape, and executed by any number of processing units, including but not limited to processors, processor cores, and processor threads. Such processors, processor cores, and processor threads may be implemented by a virtual machine provisioned in a cloud-based architecture. Embodiments are not limited to the examples described below.

Prior to process 200, it is assumed that a plurality of microservice instances have been deployed to pods of nodes of a container orchestration platform. A container of each pod to which a microservice has been deployed executes an instance of the microservice. The plurality of microservice instances may include instances of different microservices, and pods of a given node may execute instances of different microservices. Two different nodes may execute instances of a same microservice.

Resource consumption data of each of the deployed microservice instances is acquired at S210. The resource consumption data is acquired over time, while the microservice instances serve incoming client requests as described above. The resource consumption data may be collected by a monitoring agent and may comprise any of the operational metrics described above with respect to monitoring agent 190. As described above, certain amounts of specific resource types may be requested for various microservices. The acquired data may indicate the consumption of these resource types by the microservices.

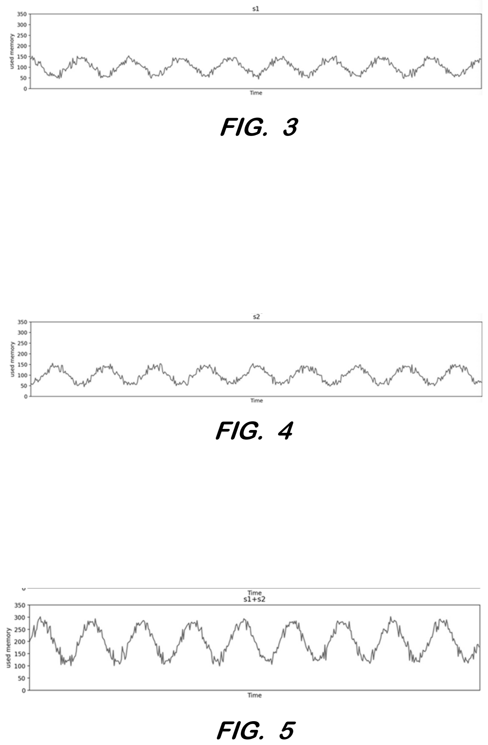

FIG. 3 is a graph of resource consumption data acquired at S210 according to some embodiments. The graph depicts memory usage over time for all instances of microservice S1, for example executing on node 120 of cluster 100 (i.e., in FIG. 1, one instance of microservice S1 is executing on node 120). The graph of FIG. 4 similarly depicts memory usage acquired over time for all instances of microservice S2 executing on node 120 (i.e., two instances of microservice S2 are executing on node 120). The FIG. 3 and FIG. 4 graphs include peaks and troughs at similar times. FIG. 5 illustrates a sum of the memory usage of microservices S1 and S2 over time. As shown, memory usage of node 120 becomes quite unbalanced when microservices S1 and S2 are both deployed on node 120. If the timing of the usage patterns of microservices S1 and S2 remain the same (e.g., in phase) and the magnitude of memory usage increases (e.g., in amplitude), the peaks of FIG. 5 may exceed the available resources of node 120, leading to overall system performance delays in response time or lack of service for a client system 150 (i.e., overutilization). Similarly, if sufficient memory resources are delegated to node 120 to handle the peaks but memory reallocation is not subsequently carried out, some memory resources delegated to node 120 may be unused (i.e., underutilization).

At S220, a total requested resources for each of a plurality of resource types is determined for each of the plurality of nodes. For example, microservice instances {*ins*_{*i,*1}, *ins*_{*i,*2}, ... *, ins_{i,j}* , ..., *ins_{i,CT_INSᵢ}*} are deployed on orchestration *nodeᵢ,* where *CT_INSᵢ* is the count of total microservice instances that can be deployed in the cluster 100 and *ins_{i,j}* is the microservice of the j-th microservice instance in *nodeᵢ.* The deployment of the entire cluster can then be expressed as: $deploy = \left[\begin{matrix}\left\{{ins}_{1 , 1}, {ins}_{1 , 2},…, {ins}_{1 , CT _ {INS}_{1}}\right\} , \\ \left\{{ins}_{2 , 1}, {ins}_{2 , 2},…, {ins}_{2 , CT _ {INS}_{2}}\right\} , … , \\ \left\{{ins}_{CT _ NODE , 1}, {ins}_{CT _ NODE , 2 ,}…, {ins}_{CT _ NODE , CT _ {INS}_{CT _ NODE}}\right\}\end{matrix}\right]$

Referring to FIG. 1 as an example, an initial deployment of microservices in cluster 100 would be expressed as:
[{S1, S2 , S2},
{S3, S3}]

The first set above {S1, S2, S2} is equivalent to {*ins*_{1,1} = S1, *ins*_{1*,*2} = S2, *ins*_{1,3} = S2}, representing one instance of S1 and two instances of S2 deployed at *node*₁ (i.e., node 120). The second set {S3, S3} is equivalent to {*ins*_{2*,*1} = S3, *ins*_{2,2} = S3, *ins*_{1*,*3} = S2}, representing two instances of S3 deployed at *node*₂ (i.e., node 130).

The requested amount of resources of each resource type for a given instance of a microservice are stored in the resource descriptions of data store 114 as described above. The requested amount of CPU resources for each microservice instance *ins_{i,j}* is a constant *reqCpu_{i,j},* and the requested amount of memory resources for microservice instance *ins_{i,j}* is a constant *reqMem_{i,j}.* These constants are generally established when the microservice is deployed and can be adjusted by an administrator as needed. In addition, other resources such as network resources could also be stored.

Given the above definitions, the total amount of CPU resources requested on *nodeᵢ* is the summation of requested CPU resources of all the microservice instances deployed on it, or: ${reqCpuNode}_{i} = {\sum }_{j = 1}^{CT _ {INS}_{i}} {reqCpuIns}_{i , j}$

Returning again to FIG. 1, node 120 is executing one instance of microservice S1 and two instances of microservice S2 while node 130 is executing two instances of microservice S3. As noted before, each node may contain any number of pods and containers and is not strictly limited to the specifics shown in FIG. 1.

The total amount of memory resources requested on *nodeᵢ* is the summary of requested memory resources of all the microservice instances deployed on it, or: ${reqMemNode}_{i} = {\sum }_{j = 1}^{CT _ {INS}_{i}} {reqMemIns}_{i , j}$

For each of the plurality of resource types, a total consumed resources is determined at S230 for each of the plurality of nodes. The CPU consumption data acquired at S210 for microservice instance *ins_{i,j}* during time range [*t*⁽¹⁾, *t*⁽²⁾, *... , t*^{(*CT_TIME*)}] may be represented as a sequence: $conCpuIn {s}_{i , j} = \left[{conCpuIns}_{i , j}^{\left(1\right)},{conCpuIns}_{i , j}^{\left(2\right)},…,{conCpuIns}_{i , j}^{\left(CT_TIME\right)}\right]$ where *CT_TIME* is the total number of sampling points acquired. The total amount of CPU resources consumed on *nodeᵢ* during time range [*t*⁽¹⁾, *t*⁽²⁾, ... *, t*(^{*CT_TIME*)}] is the summary of consumed CPU resources of all the instances deployed on it, i.e.: $conCpuNod {e}_{i} = {\sum }_{j = 1}^{CT _ {INS}_{i}} conCpuIn {s}_{i , j}$

Similarly, the chronological data of the memory consumed by microservice instance *ins_{i,j}* during time range [*t*⁽¹⁾, *t*⁽²⁾, ... *, t*^{*(CT_TIME*)}] may be represented by a sequence: $conMemIn {s}_{i , j} = \left[{conMemIns}_{i , j}^{\left(1\right)},{conMemIns}_{i , j}^{\left(2\right)},…,{conMemIns}_{i , j}^{\left(CT_TIME\right)}\right]$ and the total amount of memory resources consumed on *nodeᵢ* during time range [*t*⁽¹⁾, *t*⁽²⁾, *... ,* t^{(*CT_*TIME)}] is: $conMemNod {e}_{i} = {\sum }_{j = 1}^{CT _ {INS}_{i}} conMemIn {s}_{i , j}$

In circumstances where a node is executing more than one instance of a microservice, the deploy matrix shown in the prior paragraphs can be used to scale the resources consumed (e.g., node 120 is executing two instances of microservice S2).

Next, at S240, and for each of the plurality of resource types, a standard deviation of consumed resources for each of the plurality of nodes is determined. The deviations are determined for each node and per resource type. In one example, the standard deviation of ***conCpuNodeᵢ*** on *nodeᵢ* during time range [*t*⁽¹⁾, *t*⁽²⁾, *... , t*(^{*CT_TIME*)}] is determined as: ${stdConCpuNode}_{i} = \sqrt{\frac{{\sum }_{k = 1}^{CT _ TIME} \left({conCpuNode}_{i}^{\left(k\right)}-\frac{{\sum }_{s = 1}^{CT _ TIME} {conCpuNode}_{i}^{\left(s\right)}}{CT _ TIME}\right)}{CT _ TIME}}$

The standard deviation of ***conMemNodeᵢ*** on *nodeᵢ* during time range [*t*⁽¹⁾, *t*⁽²⁾, ... *, t*^{(*CT_TIME*)}] is: ${stdConMemNode}_{i} = \sqrt{\frac{{\sum }_{k = 1}^{CT _ TIME} \left({conMemNode}_{i}^{\left(k\right)}-\frac{{\sum }_{s = 1}^{CT _ TIME} {conMemNode}_{i}^{\left(s\right)}}{CT _ TIME}\right)}{CT _ TIME}}$

A deployment imbalance is determined at S250 based on the determined deviations. According to some embodiments, the imbalance is the weighted value of *stdConCpuNodeᵢ* and *stdConMemNodeᵢ* for all nodes, e.g.: $imbalance = {w}_{cpu} \times {\sum }_{i = 1}^{CT _ NODE} {stdConCpuNode}_{i} + {w}_{mem} \times {\sum }_{i = 1}^{CT _ NODE} {stdConMemNode}_{i}$ where *w_{cpu}* is a positive constant representing a weighted value of *stdConCpuNodeᵢ ,* and *wₘₑₘ* is a positive constant representing a weighted value of *stdConMemNodeᵢ.*

The imbalance equation shown above can be modified and analyzed in several ways. In one alternative, additional variables with corresponding weights could be added to the equation. For instance, a weight and corresponding summation measure for I/O bandwidth or other performance indicators may be added to the equation. Similarly, weights may be modified to reduce or increase a particular resource's impact on the equation. For instance, all weights except for one (e.g.. *w_{cpu}*) could be set to zero such that only the consumption of one resource is analyzed (e.g., CPU usage). The various weights can also be used to provide commonality among the various resources (e.g., obtaining commonality such that cycles-per-second and megabytes of memory can be summed after adjustment via the various weights).

Regardless of the various parameters used to calculate the imbalance, the larger the imbalance determined for a node, the more likely the node will experience underutilization or overutilization. Once so determined, the deployment of microservices across the various nodes can be readjusted to minimize or reduce the various imbalances observed across the plurality of nodes.

At S260, an assignment of the microservice instances to the plurality of nodes to reduce the deployment imbalance is determined. According to some embodiments, S260 determines an assignment of microservice instances to nodes which would reduce the current magnitude of *imbalance* if the microservices instances were deployed to the nodes according to the assignment. At S270, the microservice instances are actually deployed to the plurality of nodes based on the assignment determined at S260. Such deployment may be performed by altering the resource descriptions to associate each microservice instance with a specific node specified by the determined assignment.

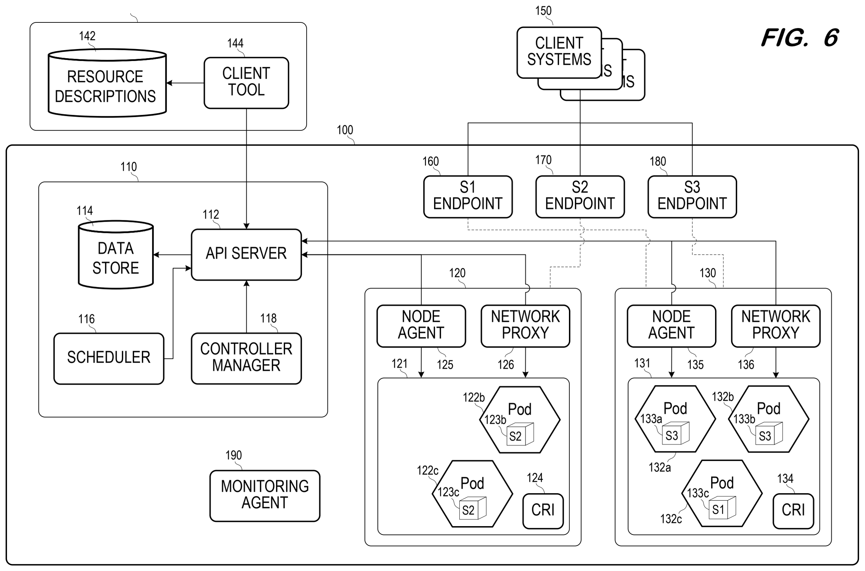

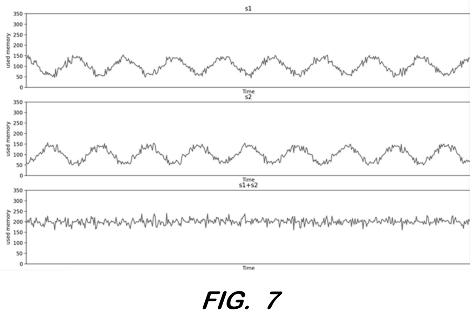

FIG. 6 illustrates cluster 100 after execution of process 200 according to some embodiments. The new deployment may be expressed as:
[{S2 , S2},
{S3, S3, S1}]
As shown, microservice S1 has been assigned to and deployed to node 130, where it now executes in container 133c of pod 132c. FIG. 7 illustrates memory usage of microservices S1 and S2 according to one example. Contrary to the example of FIGS. 3-5, the peaks and valleys of memory usage of microservices S1 and S2 are staggered in time. By deploying microservice S1 to node 130 along with microservice S2, total resource consumption is equalized and resource utilization is improved.

According to some embodiments, a new assignment is determined at S270 to minimize the *imbalance* calculated as described above. In one example, the determination is subject to the following constraint conditions: $MIN _ CT _ INS \leq CT _ {INS}_{i} \leq MAX _ CT _ INS$ $MIN _ REQ _ CPU \leq {reqCpuNode}_{i} \leq MAX _ REQ _ CPU$ $MIN _ REQ _ MEM \leq {reqMemNode}_{i} \leq MAX _ REQ _ MEM$ where *MAX_CT_INS* is the maximum limit of *CT_INSᵢ* on *nodeᵢ., MIN_CT_INS* is the minimum limit of *CT_INSᵢ* on *nodeᵢ, MAX_REQ_CPU* is the maximum limit of *reqCpuNodeᵢ* on *nodeᵢ, MIN_REQ_CPU* is the minimum limit of *reqCpuNodeᵢ* on *nodeᵢ, MAX_REQ_MEM* is the maximum limit of *reqMemNodeᵢ* on *nodeᵢ,* and *MIN_REQ_MEM* is the minimum limit of *reqMemNodeᵢ* on *nodeᵢ.*

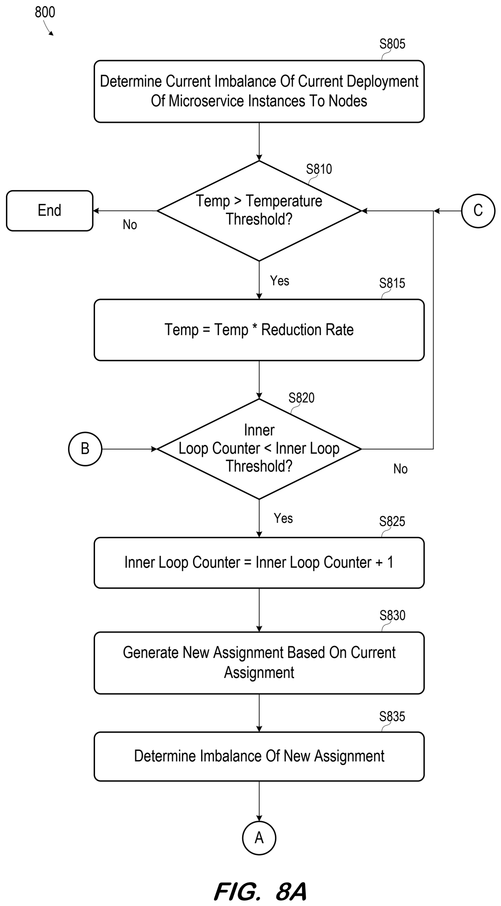

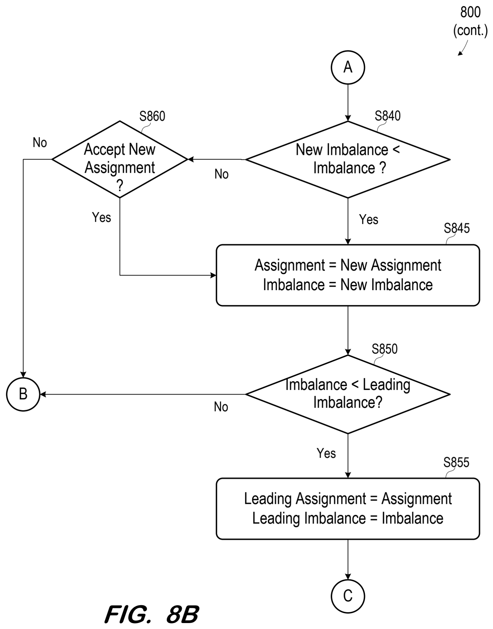

Due to the difficulty of determining an exact solution to minimize the *imbalance,* an intelligent optimization algorithm may be employed to find an approximate solution. FIGS. 8A and 8B illustrate a probabilistic optimization algorithm to determine a microservice assignment based on an imbalance according to some embodiments. The probabilistic optimization algorithm of FIGS. 8A and 8B is based on a simulated annealing algorithm but embodiments are not limited thereto. Process 800 starts with an initial solution and iteratively searches for other possible solutions by randomly disturbing the current solution to generate a new candidate solution.

Initially, at S805, a current imbalance of a current assignment of microservice instances to nodes is determined. The imbalance may be determined as described above with respect to S210 through S250, but embodiments are not limited thereto.

At S810, it is determined whether a variable temp of the simulated annealing algorithm is greater than a temperature threshold. In some embodiments, temp is initialized to a relatively large positive value, such as 100, and the temperature threshold is initialized to a small positive decimal, such as 0.01. Flow therefore first proceeds from S810 to S815, at which temp is multiplied by a reduction rate (e.g., 0.99 or another large positive percentage). The use of the term "temperature" is related to the metallurgical process of annealing. For this application, the variable "temperature" is simply used to determine a number of iterations to provide a near-optimum assignment of microservice instances across the nodes and does not reflect any physical temperature of any node or pod.

At S820, it is determined whether an inner loop counter is greater than an inner loop threshold. The inner loop counter may be initialized to 0, and the inner loop threshold may be initialized to a relatively large positive integer (i.e., representing a Markov chain length), such as 100. Flow therefore proceeds to S825 to increment the inner loop counter.

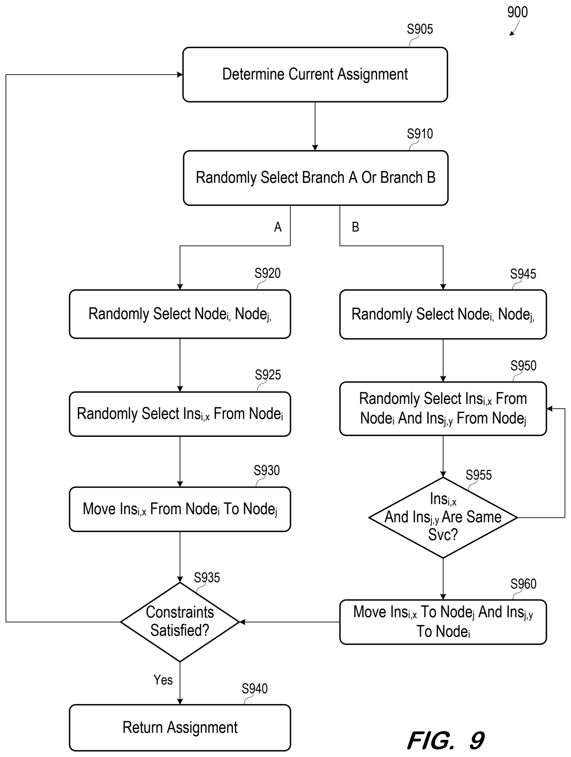

A new assignment is generated at S830 based on the current assignment. S830 generates a new assignment of microservice instances to nodes by perturbing the current assignment of microservice instances to nodes. Some embodiments of S830 will be described below in detail with respect to FIG. 9.

An imbalance is determined for the new assignment at S835. The imbalance is determined based on the per-microservice resource consumption data which was previously acquired at S210 while operating the microservices instances as deployed according to the current assignment. Using this consumption data, the total consumed resources for each of the plurality of nodes is determined by assuming the microservice instances are deployed to the nodes as specified by the new assignment. The total requested resources for each node are determined based on the previously-determined requested resources of each microservice and the new assignment of microservice instances to nodes. Standard deviations of consumed resources for each resource type are determined for each node as described with respect to S250, and the imbalance is determined based thereon.

At S840 it is determined whether the newly-calculated imbalance is less than the imbalance of the current assignment. If so, the newly-determined assignment is denoted as the current assignment and the newly-calculated imbalance is denoted as the current imbalance at S845. It is then determined at S850 whether the now-current imbalance is less than a leading, or lowest, imbalance of the current execution of process 800. If so, the now-current assignment is denoted as the leading assignment and the now-current imbalance is denoted as the leading imbalance at S855. Flow then returns to S810 and continues as described above.

If, at S840, it is determined that the newly-calculated imbalance is not less than the imbalance of the current assignment, flow proceeds to S860. S860 may comprise determining whether or not to accept the new assignment, for example based on a probabilistic method. In one embodiment, S860 includes generation of a random decimal number *r* in the range [0,1] and determination of whether $r < {e}^{\frac{- diff _ imbalance}{temp}}$*,* where *diff_imbalance* is the difference between the two imbalances compared at S840. If the determination is true, flow proceeds to S845. If not, flow returns to S820 to execute another iteration of the inner loop of process 800.

Flow also returns to S820 if it is determined at S850 the now-current imbalance is not less than the currently-leading imbalance of the current execution of process 800. Process 800 terminates once it is determined at S810 that temp is no longer greater than the temperature threshold. Upon termination, the microservice instances may be deployed to the plurality of nodes as specified by the current leading assignment.

FIG. 9 illustrates process 900 to determine an alternative microservice assignment according to some embodiments. In some embodiments, process 900 is an implementation of S830 of process 800.

At S905, the current assignment of microservice instances to nodes (e.g., *deploy,* above) is determined. Next, at S910, one of two branches (A and B) are randomly selected. As will be evident from the description below, branch A executes the movement of a microservice instance of the current deployment from one node to another node, while branch B executes a swapping of microservice instances of the current deployment between two nodes.

If branch A is selected at S910, two nodes are randomly selected at S920. A microservice instance assigned to one of the nodes is randomly selected at S925 and the selected microservice instance is moved from the assigned node to the other of the two nodes at S930. If branch B is selected at S910, two nodes are randomly selected at S945, and a first microservice instance assigned to one of the nodes and a second microservice instance assigned to the other node are selected at S950. At S955, it is determined whether the selected microservice instances are instances of the same microservice. If so, flow returns to S950 to randomly select two other microservice instances of the two selected nodes. If the selected microservice instances are not instances of the same microservice, each microservice instance is re-assigned from its assigned node to the other selected node.

After S930 or S960, it may be determined whether the new assignment satisfies relevant constraints, such as but not limited to the constraint conditions described above with respect to S270. If not, flow returns to S905 and continues as described below. If so, the new assignment, i.e., reflecting the moved microservice instance or the swapped microservice instances, is returned at S940.

The foregoing process may result in an improved assignment of microservice instances to nodes. Based on this assignment, the total amount of resources requested for each node may be calculated, e.g., *reqCpuNodeᵢ* and *reqMemNodeᵢ* for each *nodeᵢ.* Next, the resources allocated to each node may be adjusted to account for the total amount of resources requested for the microservice instances assigned to each node.

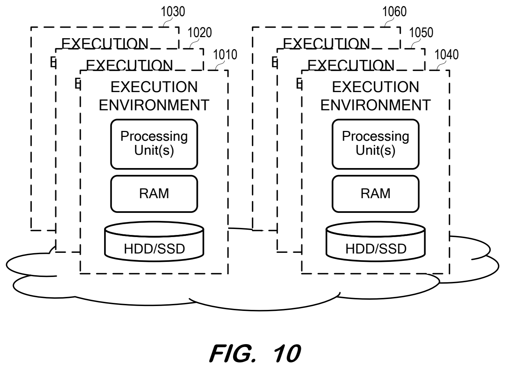

FIG. 10 illustrates a cloud-based cluster executing microservices according to some embodiments. The illustrated components may comprise cloud-based compute resources residing in one or more public clouds providing self-service and immediate provisioning, autoscaling, security, compliance, and identity management features.

Execution environments 1010-1060 may comprise servers or virtual machines of a Kubernetes cluster. Execution environments 1010-1060 may support pods for executing containerized applications which provide one or more services to users. Execution environments 1010-1030 may comprise a control plane of a cluster while execution environments 1040-1060 may comprise nodes of the cluster.

The foregoing diagrams represent logical architectures for describing processes according to some embodiments, and actual implementations may include more or different components arranged in other manners. Other topologies may be used in conjunction with other embodiments. Moreover, each component or device described herein may be implemented by any number of devices in communication via any number of other public and/or private networks. Two or more of such computing devices may be located remote from one another and may communicate with one another via any known manner of networks and/or a dedicated connection. Each component or device may comprise any number of hardware and/or software elements suitable to provide the functions described herein as well as any other functions. For example, any computing device used in an implementation of a system according to some embodiments may include a processor to execute program code such that the computing device operates as described herein.

All systems and processes discussed herein may be embodied in program code stored on one or more non-transitory computer-readable media. Such media may include, for example, a hard disk, a DVD-ROM, a Flash drive, magnetic tape, and solid-state Random Access Memory (RAM) or Read Only Memory (ROM) storage units. Embodiments are therefore not limited to any specific combination of hardware and software.

Embodiments described herein are solely for the purpose of illustration. Those in the art will recognize other embodiments may be practiced with modifications and alterations to that described above.

## Claims

1. A computer-implemented method comprising:
receiving data indicative of a first assignment of a plurality of microservice instances to respective ones of a plurality of nodes, the plurality of microservice instances deployed to the respective ones of the plurality of nodes according to the first assignment for execution by the respective ones of the plurality of nodes;
determining a consumption of a first type of resource by each of the plurality of microservice instances executed by the plurality of nodes;
determining, for each of the plurality of nodes, a total amount of resources of the first type requested for the one or more respective microservice instances executed by the node;
determining, for each of the plurality of nodes, a deviation based on the consumption of the first type of resource by each of the respective one or more microservice instances executed by the node;
determining a first imbalance based on the deviations;
determining a second assignment of the plurality of microservice instances to the plurality of nodes based on the first assignment, the first imbalance and the total amounts of requested resources of the first type determined for each of the plurality of nodes; and
deploying the plurality of microservice instances to the plurality of nodes according to the second assignment.

2. The method of Claim 1, further comprising:
determining a second consumption of a second type of resource by each of the plurality of microservice instances executed by the plurality of nodes; and
determining, for each of the plurality of nodes, the deviation based on the consumption of the first type of resource by each of the respective one or more microservice instances executed by the node and the consumption of the second type of resource by each of the respective one or more microservice instances executed by the node.

3. The method of Claim 1 or 2, wherein the first assignment assigns a first instance of the plurality of microservice instances to a first one of the plurality of nodes, and
wherein the second assignment assigns the first instance of the plurality of microservice instances to a second one of the plurality of nodes.

4. The method of Claim 3, wherein the first instance of the plurality of microservice instances receives a client request at the second one of the plurality of nodes after deployment of the plurality of microservice instances to the plurality of nodes according to the second assignment.

5. The method of any one of Claims 2 to 4, wherein determining the consumption of the first type of resource by each of the plurality of microservice instances comprises determining time series data of the consumption of the first type of resource by each of the plurality of microservice instances, and
wherein determining the second consumption of the second type of resource by each of the plurality of microservice instances comprises determining time series data of the consumption of the second type of resource by each of the plurality of microservice instances.

6. The method of any one of Claims 1 to 5, wherein determining the consumption of the first type of resource by each of the plurality of microservice instances comprises determining time series data of the consumption of the first type of resource by each of the plurality of microservice instances.

7. The method of any one of Claims 1 to 6, further comprising:
determining, for each of the plurality of nodes, of a second deviation based on the determined consumption of the first type of resource by each of the one or more microservice instances assigned to the node by the second assignment;
determining a second imbalance based on the second deviations; and
determining that the second imbalance is less than the first imbalance.

8. The method of any one of Claims 1 to 7, wherein the first assignment assigns a first instance of the plurality of microservice instances to a first one of the plurality of nodes, and
wherein the second assignment assigns the first instance of the plurality of microservice instances to a second one of the plurality of nodes.

9. The method of any one of Claims 1 to 8, further comprising:
determining a third assignment of the plurality of microservice instances to the plurality of nodes based on the second assignment and the total amounts of requested resources of the first type determined for each of the plurality of nodes;
determining, for each of the plurality of nodes, of a third deviation based on the determined consumption of the first type of resource by each of the one or more microservice instances assigned to the node by the third assignment;
determining a third imbalance based on the third deviations; and
determining that the third imbalance is greater than the second imbalance.

10. A system comprising:
a memory storing executable program code; and
one or more processing units to execute the executable program code to cause the system to perform operations according to a method of any one of claims 1 to 9.

11. One or more non-transitory computer-readable media storing program code executable by a computing system to cause the computing system to perform operations according to a method of any one of claims 1 to 9.
